# EUROPEAN PATENT SPECIFICATION

(11) **EP 2 730 877 B1**
(45) Date of publication and mention of the grant of the patent: **10.02.2016**
(21) Application number: 12812033.4
(22) Date of filing: 08.07.2012
(51) Int. Cl.: F28D 19/04, F23L 15/02

(54) **ROTARY GAS-GAS HEATER WITH AXIALLY ISOLATED AND SEALED COMPARTMENTS IN LEAKTIGHT SEALING SYSTEM**
ROTIERENDES GAS-GAS-HEIZGERÄT MIT AXIAL ISOLIERTEN UND ABGEDICHTETEN KAMMERN IN EINEM LECKDICHTEN DICHTUNGSSYSTEM
RÉCHAUFFEUR GAZ-GAZ ROTATIF DOTÉ DE COMPARTIMENTS ISOLÉS ET SCELLÉS AXIALEMENT DANS UN SYSTÈME DE SCELLEMENT ÉTANCHE

(30) Priority: 09.07.2011 CN 201110191350
(43) Date of publication of application: 14.05.2014
(73) Proprietor: Cheng, Aiping, Beijing 100031 (CN)
(72) Inventor: Cheng, Aiping, Beijing 100031 (CN)
(74) Representative: Decamps, Alain René François
(86) International application number: PCT/CN2012/078325
(87) International publication number: WO 2013/007176

(56) References cited:
- EP-A1- 1 584 869
- CN-A- 102 200 407
- CN-U- 201 731 508
- CN-Y- 2 564 973
- CN-Y- 200 965 242
- GB-A- 1 066 202
- JP-A- H09 229 577
- SU-A2- 987 295
- US-A1- 2010 251 975

## Description

### FIELD OF THE INVENTION

The present invention relates to a heat exchanger, and in particular to the improvement of a sealing device of a rotary gas-gas heat exchanger.

### BACKGROUND OF THE INVENTION

A rotary gas-gas heat exchanger (GGH) is among the most widely applied flue gas heat exchangers in a wet flue gas desulfurization (FGD) device. The operation principle lies in that the heat storing element in the rotor bay conveys heat from the raw high temperature flue gas to the clean cold flue gas, by means of smooth or corrugated metal foils on it surface or by means of other heat carriers. During operation, the raw high temperature flue gas passes a side of the rotor, while the clean cold flue gas passes the other side of the rotor. The rotor rotates slowly, so that the hot raw flue gas and the cold clean flue gas pass the plurality of heat conduction elements on the rotor in turn. When the raw high temperature flue gas passes the heat conduction elements, a portion of heat in the raw high temperature flue gas is transferred to the heat conduction elements. When the heat conduction elements rotate to the clean cold flue gas side, the heat carried by them is transferred to the clean cold flue gas. Thus, the temperature of the clean cold flue gas is increased, while the heat conduction elements themselves are cooled. These two flue gases flow through two portions of the rotor which are separated along the diameter, and these two portions are separated by a sealing plate. The flow directions of the original flue gas and the clean flue gas are opposite to each other.

GGH is composed of a cylindrical rotor, a cylindrical shell, a transmission device, a sealing device, and a soot blowing system. The rotor is divided into several fan-shaped bays. Each fan-shaped bay is filled with heat conduction elements formed by corrugated plates. The rotor is divided into an original flue gas circulation zone and a clean flue gas circulation zone along the diameter in its cross section. The two circulation zones are separated by a transition region (which is equipped with a sealing system). The original flue gas circulation zone and the clean flue gas circulation zone communicate with an inlet flue and an outlet flue respectively. A motor drives the rotor through a transmission device. The heat storing elements of the rotor pass the original flue gas circulation zone and the clean flue gas circulation zone in turns, the high temperature original flue gas transfers heat to the heat conduction elements from down to up, and the heated surfaces of these heat conduction elements turn to the clean flue gas circulation zone to transfer the stored heat to the cold clean flue gas which circulates from up to down. Each turn of the rotor indicates a heat transfer process. The transition region is a sealed region which separates the original flue gas circulation zone from the clean flue gas circulation zone. The original flue gas circulation zone is namely the raw original flue gas zone, while the cold flue gas circulation zone is namely the clean flue gas zone. Since the pressure of the original flue gas is larger than that of the clean flue gas, for the purpose of preventing the original flue gas from leaking into the clean flue gas zone through the gap between the rotor and the shell, the GGH is provided with a radial and axial sealing, which is arranged at the sealed region, and a annular sealing which is arranged between the shell and the periphery of the upper and lower revolution surfaces of the rotor.

Currently, the rotary GGHs in the domestic desulfurization systems mostly adopt technologies which are imported from foreign countries like USA, Germany, France and Britain. All of the imported rotary GGHs suffer from the defects like insufficient sealing effect and a relatively high air leakage rate. For these imported rotary GGH devices, the air leakage rate is guaranteed to a value of 0.5-1%, while such a guaranteed value generally can not be reach during practical applications. According to the statistical results, the air leakage rate for a superior GGH may reach 0.8% in a short period of time after the first installation, and has an average of 1.5%. The lowest air leakage rate may reach 0.6%, and is larger than 10% in the worst case (e.g., the rotary GGH device in Huadian Laiwu power plant), which seriously affect the total efficiency of the desulfurization system.

US-A-20100251975 discloses a rotary gas-gas heat exchanger with an axial isolating sealed cabin of a leak-free sealing system according to the preamble of claim 1.

### SUMMARY OF THE INVENTION

It is an object of the present invention to overcome defects in the prior art.

It is another object of the present invention to provide a rotary gas-gas heat exchanger which has an improved sealing performance.

It is another object of the present invention to provide a sealing structure in the heat exchanger which is simple in structure, low in cost, and excellent in performance.

The technical solution of the present invention lies in a rotary gas-gas heat exchanger with an axial isolating sealed cabin of a leak-free sealing system, comprising:
a shell;
a rotor, which is arranged in said shell and is driven to rotate with respect to said shell;
a sealing system, which is arranged between said shell and a spindle of said rotor, and divides the space between said shell and the spindle of said rotor into an original flue gas circulation zone and a clean flue gas circulation zone;
wherein said sealing system comprises: a sealing system body, and isolating sealed sections which are arranged in the gap between said shell and an outer periphery of said rotor, and wherein there are four isolating sealed sections, said sealing system body has two ends which are opposite with each other in the radial direction of the rotor, the isolating sealed sections are arranged in a paired manner at both sides of each of said two ends, and an intermediate region of each pair of isolating sealed sections communicates with a fan.

Preferably, said rotor comprises a spindle in a middle part, a cover at the periphery, and a supporting bay between said spindle and said cover, a heat storing element consisting of heat storing sheets is mounted in the supporting bay, the outer periphery of said rotor is that of said cover, said original flue gas circulation zone indicates a zone between said spindle and the cover at a periphery of an inlet flue of the original flue gas, and said clean flue gas circulation zone indicates a zone between said spindle and the cover at a periphery of an outlet flue of the original flue gas flue.

Preferably, in said rotary gas-gas heat exchanger with an axial isolating sealed cabin of a leak-free sealing system, said sealing system body comprises two sub-fan-shaped sealing bodies which extend from said spindle to said shell and are opposite with each other in the radial direction of the rotor.

Preferably, in said rotary gas-gas heat exchanger with an axial isolating sealed cabin of a leak-free sealing system, a radial sealing sheet is further arranged between said spindle and said cover.

Preferably, in said rotary gas-gas heat exchanger with an axial isolating sealed cabin of a leak-free sealing system, vent holes are arranged on fan-shaped sealing plates at the lower and upper sides of each sub-fan-shaped sealing body, and said vent hole communicate with the fan.

Preferably, in said rotary gas-gas heat exchanger with an axial isolating sealed cabin of a leak-free sealing system, a low-leakage fan injects a low-leakage air to said intermediate region and said vent hole simultaneously, thereby forming an isolating air curtain.

Preferably, in said rotary gas-gas heat exchanger with an axial isolating sealed cabin of a leak-free sealing system, said isolating sealed section is a labyrinth which comprises partition plates which are arranged vertically and horizontally and spaced apart.

Preferably, in said rotary gas-gas heat exchanger with an axial isolating sealed cabin of a leak-free sealing system, said isolating sealed section comprises a plurality of spaced-apart axial sealing sheets which extend from said shell to said rotor.

Preferably, in said rotary gas-gas heat exchanger with an axial isolating sealed cabin of a leak-free sealing system, two pressure sensors are arranged at an outlet of the fan and a pipeline for the original flue gas respectively, both pressure sensors are in communication with a controller, and said controller controls the opening degree of an outlet valve of the low-leakage fan or the power of the fan according to values of said two pressure sensors.

Preferably, in said rotary gas-gas heat exchanger with an axial isolating sealed cabin of a leak-free sealing system, pressure sensors are arranged at an output end of the fan and a pipeline for the original flue gas respectively, a differential pressure transducer is connected between said two pressure sensors, said differential pressure transducer transfers in real time a differential pressure between said two pressure sensors to a controller, and said controller controls the opening degree of an outlet valve of the fan or the power of the fan according to said differential pressure.

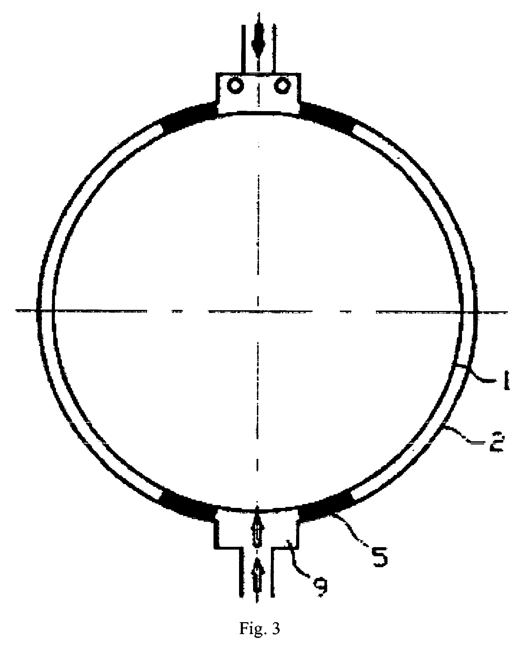

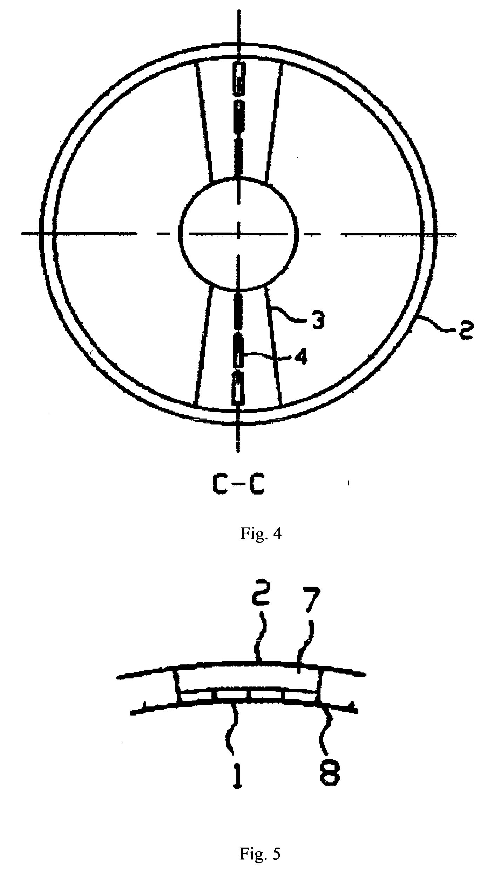

The technical effects of the present invention lie in that such a heat exchanger has an excellent sealing effect and a low air leakage rate. In particular, as for a gas-gas heat exchanger, only the sealing in the heat conduction bay has been considered in the prior art, while the sealing at the gap between the rotor cover and the shell. In a gas-gas heat exchanger, the annular space between the rotor spindle and the rotor cover is divided by the sealing system into an original flue gas circulation zone and a clean flue gas circulation zone, namely, the pipelines through which the original flue gas passes the gas-gas heat exchanger, and the pipelines through which the clean flue gas passes the gas-gas heat exchanger. During operation of the gas-gas heat exchanger, the original flue gas has a relatively larger pressure, and may leak to the clean flue gas side in the cover. Such a leakage should primarily be prevented. In the prior art, there is an approach in which radial, axial, and annular sealing parts are arranged in the sealed region between the spindle and the cover, so as to reduce leakage to a minimum extent. However, it is apparent that during operation, both the original flue gas and the clean flue gas will leak to the outside of the cover, and thus leak into the gap between the cover and the shell. The original flue gas will also leak to the clean flue gas side through such a gap. It is an issue that how to avoid the leakage at the gap. In this regard, the present invention proposes to arrange isolating sealed sections in the gap, as shown in Fig. 3. The four black regions in Fig. 3 represent isolating sealed sections, and two fan-shaped regions in Fig. 4 represent sealing system bodies. The isolating sealed sections are arranged at both sides of each fan-shaped region. It is not sufficient to realize isolation only by the isolating sealed sections. In the present invention, air is injected into an intermediate region between two isolating sealed sections, thus forming an isolating air curtain between the cover and the shell, which further reduces the possibility of leakage.

The present invention may further comprise two pairs of fan-shaped sealing plates, and pairs of holes are arranged in the two pairs of fan-shaped sealing plates which correspond to each other in positions. In this manner, when the low-leakage fan is started, the pairs of holes which correspond to each other in positions form an air curtain from the upper and lower parts to the middle part. The air curtain blocks leakage between the original flue gas and the clean flue gas, and only allows the heat of the high temperature flue gas to be transferred to the cold flue gas through the heat conduction element in the rotor. In the present invention, the fan-shaped sealing plates can also form an air curtain, so as to provide a more strict sealing in the sealed region between the spindle and the cover. By virtue of the enhanced sealing between the spindle and the cover and the additional sealing in the gap between the cover and the shell, it is possible to realize the most strict sealing effect around the world.

In the present invention, the isolating sealed section is a labyrinth which can provide a better blocking effect against the flue gas.

In the present invention, two pressure measurement points of differential pressure transducers are arranged at an outlet of said low-leakage fan and an inlet flue of the original flue gas respectively. The differential pressure transducers are in communication with a controller. Said controller controls the opening degree of an outlet valve of the fan or the power of the fan according to values of said differential pressure transducers. According to detection results of the differential pressure transducers, the controller can adjust the rate of air output from the fan at any time. It is generally a choice based on experience to set the outlet of the low-leakage fan at a pressure lower than the pipeline of the original flue gas by 300-500 Pa, so as to realize the aims that the energy is not waste and an excellent sealing effect is provided. If the pressure difference is larger than 500 Pa, the opening degree of an outlet valve of the fan or the power of the fan is decreased. Otherwise, if the pressure difference is smaller than 300 Pa, the opening degree of the outlet valve of the fan or the power of the fan is increased.

### BRIEF DESCRIPTION OF THE DRAWINGS

Fig. 1 is a structural diagram showing a gas-gas heat exchanger which has been equipped with a leak-free sealing system of the present invention;
Fig. 2 is a cross-sectional view showing the gas-gas heat exchanger which has bee equipped with the leak-free sealing system along line A-A in Fig. 1;
Fig. 3 is a cross-sectional view showing the gas-gas heat exchanger which has bee equipped with the leak-free sealing system along line B-B in Fig. 1, in which only a shell, a rotor and some sealing components are shown;
Fig. 4 is a cross-sectional view showing the gas-gas heat exchanger which has bee equipped with the leak-free sealing system along line C-C in Fig. 1, in which a shell, a spindle, a fan-shaped sealing plate and holes thereon are shown, and the external contour of the rotor is now shown;
Fig. 5 is a structural diagram showing sealed sections which a sealing system adopts in a gap between the rotor and the shell; and
Fig. 6 is a structural diagram showing sealed sections of another type which a sealing system adopts in a gap between the rotor and the shell.

### DETAILED DESCRIPTION OF THE EMBODIMENTS

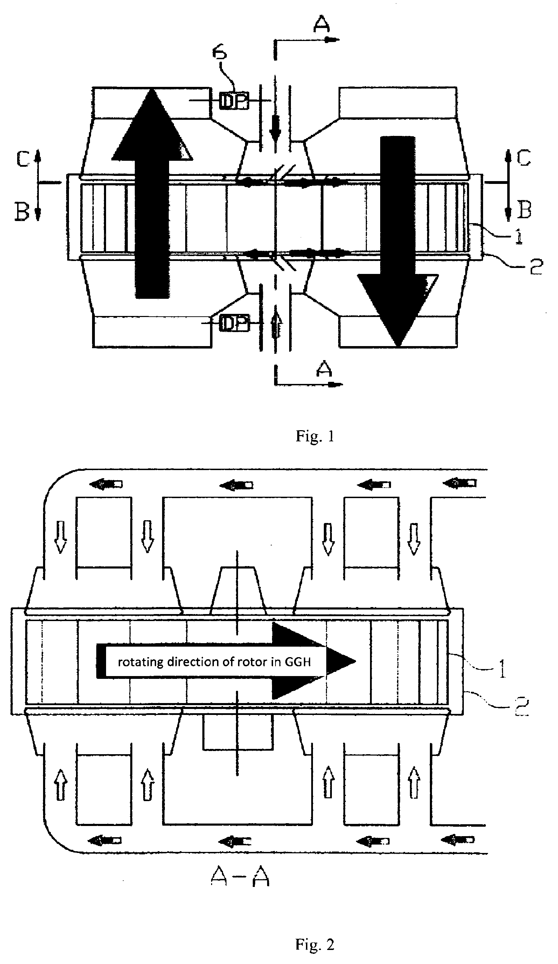

As shown in Figs. 1-4, the heat exchanger of the present invention comprises a rotor 1, a shell 2, a sealing system, and a transmission device. The shell 2 is provided with two pairs of fan-shaped sealing plates 3 at both ends of the rotor 1 respectively. Said fan-shaped sealing plates 3 are provided with long holes 4, and are further provided with an isolating air pipeline which communicates with a low-leakage fan.

Labyrinth isolating sealed sections 5 are arranged at positions of an annular chamber enclosed by said shell 2 and rotor 1 which are close to both sides of the fan-shaped sealing plates 3. The shell 2 is provided with an isolating air pipeline at the portion between two neighboring isolating sealed sections 5 which communicates with the low-leakage fan.

Two pressure sensors are arranged at said pipeline which communicates with the output end of the low-leakage fan and the pipeline at the original flue gas side. A differential pressure transducer 6 is connected between said two pressure sensors. The differential pressure transducer 6 is connected with a controller, which can control the opening degree of the valve at the outlet pipeline of the low-leakage fan or the frequency of the low-leakage motor.

A pressure measurement point is mounted at a blast box (or pipeline) for the isolating low-leakage air, and a pressure measurement point is mounted at a pipeline at the corresponding original flue gas side. The differential pressure transducer 6 is mounted between these two pressure measurement points. The differential pressure signal is transferred to a dedicated programmable logic controller PLC or a distributed control system DCS in a central control room. The opening degree of the pipeline valve at the outlet of the low-leakage fan or the frequency of the low-leakage motor can be controlled accurately according to variations of the differential pressure signal, so as to adjust the sealing accurately and operate in an energy-saving manner.

The flux of a purge air is reasonably adjusted, so as to reach an amount of revolving and carrying leakage of 1.5-2 times.

According to the present invention, the air leakage rate in the rotary GGH can be reduced to 0.1-0.4%, which surpasses the leading level in the world. As a result, hundreds of thousands CNY can be save each month for a 600MW unit.

### The first embodiment

As shown in Fig. 4, at the driving end and non-driving end of the rotor 1 along a symmetry axis of the upper and lower fan-shaped sealing plates 3, long holes 4 are arranged and sealing air pipelines are mounted for injecting isolating low-leakage air. By injecting low-leakage air, an efficient isolating air curtain is formed between the upper and lower two pairs of fan-shaped sealing plates 3 and the rotor 1. A pressure measurement point is mounted at a blast box or pipeline for purging air, and a pressure measurement point is mounted at a pipeline for the corresponding original flue gas side. The differential pressure transducer 6 is mounted between the pressure measurement points. The differential pressure transducer 6 transfers the differential pressure signal to a dedicated PLC or a DCS (i.e., the controller) in a central control room. The opening degree of the pipeline valve at the outlet of the low-leakage fan or the frequency of the low-leakage motor can be controlled accurately according to variations of the differential pressure signal, so as to adjust the sealing accurately and operate in an energy-saving manner.

The rounded body at the exact center of Fig. 4 is a spindle, and two pairs of fan-shaped sealing plates 3 extend outward from the spindle. The circle adjacent to the inside of the shell 2 does not indicate the rotor 1, but the edge of the annular sealing component outside the outer periphery of the rotor. In other words, the fan-shaped sealing plates 3 extends all the way from the spindle to the annular sealing component, and only a slight gap remains between the fan-shaped sealing plate and the shell 2.

### The second embodiment

As shown in Fig. 5, said labyrinth isolating sealed section is composed of the sealing plate 7 and the periphery of rotor 1. The sealing plate 7 has an inner wall in a curved shape that is adapted to the periphery of rotor 1, and the sealing plate 7 is fastened to an inner wall of the shell 2. Such a structure is suitable for the case in which axial sealing sheets 8 are fixed to the periphery of rotor 1. Two curved sealing plates 7 are mounted at positions of an annular chamber enclosed by the rotor 1 and shell 2 which are close to the fan-shaped sealing plates 3, so that there are four sealing plates 7 in total. An axial isolating sealed cabin 9 is formed at the driving end and non-driving end respectively. At the sealed sections at both sides of each axial isolating sealed cabin 9, multistage small sealing space is formed by the axial sealing sheets 8 of the GGH rotor 1 and the curved sealing plates 7. In this way, a labyrinth sealing structure is formed to enhance the sealing effect. Isolating low-leakage air is injected from the axial isolating sealed cabin 9 at the driving and non-driving ends, so as to isolate the original flue gas and the clean flue gas, thus forming an isolating sealing in the driving ring chamber and blocking leakage.

### The third embodiment

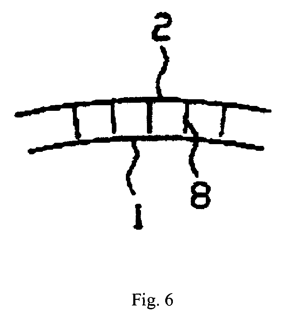

As shown in Fig. 6, said labyrinth isolating sealed sections are composed by several axial sealing sheets which are fixed to the inner wall of the shell 2 and the periphery of rotor 1. Such a structure is suitable for the case in which the periphery of rotor 1 has a smooth circumferential surface.

While the present invention has been described in connection with preferred embodiments, it will be understood that modifications within the principles outlined above will be evident to those skilled in the art, and thus the invention is not limited to the preferred embodiments but is intended to encompass such modifications within the scope of the appended claims.

## Claims

1. A rotary gas-gas heat exchanger with an axial isolating sealed cabin (9) of a leak-free sealing system, comprising:
a shell (2);
a rotor (1), which is arranged in said shell (2) and is driven to rotate with respect to said shell (2);
a sealing system, which is arranged between said shell (2) and a spindle of said rotor (1), and divides the space between said shell (2) and the spindle of said rotor (1) into an original flue gas circulation zone and a clean flue gas circulation zone, said sealing system having isolating sealed sections (5) which are arranged in the gap between said shell and an outer periphery of said rotor (1), and wherein there are four isolating sealed sections (5),
**characterised in that**
said sealing system comprises: a sealing system body having two ends which are opposite with each other in the radial direction of the rotor (1), the isolating sealed sections (5) are arranged in a paired manner at both sides of each of said two ends, and an intermediate region of each pair of isolating sealed sections (5) communicates with a fan.

2. The rotary gas-gas heat exchanger with an axial isolating sealed cabin (9) according to a leak-free sealing system of claim 1, **characterized in that** said rotor (1) comprises a spindle in a middle part, a cover at the periphery, and a supporting bay between said spindle and said cover, a heat storing element consisting of heat storing sheets is mounted in the supporting bay, the outer periphery of said rotor (1) is that of said cover, said original flue gas circulation zone indicates a zone between said spindle and the cover at a periphery of an inlet flue of the original flue gas, and said clean flue gas circulation zone indicates a zone between said spindle and the cover at a periphery of an outlet flue of the original flue gas flue.

3. The rotary gas-gas heat exchanger with an axial isolating sealed cabin (9) of a leak-free sealing system according to claim 2, **characterized in that** said sealing system body comprises two sub-fan-shaped sealing bodies which extend from said spindle to said shell (2) and are opposite with each other in the radial direction of the rotor (1).

4. The rotary gas-gas heat exchanger with an axial isolating sealed cabin (9) of a leak-free sealing system according to claim 3, **characterized in that** a radial sealing sheet (8) is further arranged between said spindle and said cover.

5. The rotary gas-gas heat exchanger with an axial isolating sealed cabin (9) of a leak-free sealing system according to claim 4, **characterized in that** vent holes are arranged on fan-shaped sealing plates (7) at the lower and upper sides of each sub-fan-shaped sealing body, and said vent hole communicate with the fan.

6. The rotary gas-gas heat exchanger with an axial isolating sealed cabin (9) of a leak-free sealing system according to claim 5, **characterized in that** a low-leakage fan injects a low-leakage air to said intermediate region and said vent hole simultaneously, thereby forming an isolating air curtain.

7. The rotary gas-gas heat exchanger with an axial isolating sealed cabin (9) of a leak-free sealing system according to claim 1 or 6, **characterized in that** said isolating sealed section (5) is a labyrinth which comprises partition plates which are arranged vertically and horizontally and spaced apart.

8. The rotary gas-gas heat exchanger with an axial isolating sealed cabin (9) of a leak-free sealing system according to claim 1 or 6, **characterized in that** said isolating sealed section (5) comprises a plurality of spaced-apart axial sealing sheets (8) which extend from said shell (2) to said rotor (1).

9. The rotary gas-gas heat exchanger with an axial isolating sealed cabin (9) of a leak-free sealing system according to claim 1, **characterized in that** two pressure sensors are arranged at an outlet of the fan and a pipeline for the original flue gas respectively, both pressure sensors are in communication with a controller, and said controller controls the opening degree of an outlet valve of the low-leakage fan or the power of the fan according to values of said two pressure sensors.

10. The rotary gas-gas heat exchanger with an axial isolating sealed cabin (9) of a leak-free sealing system according to claim 1, **characterized in that** pressure sensors are arranged at an output end of the fan and a pipeline for the original flue gas respectively, a differential pressure transducer (6) is connected between said two pressure sensors, said differential pressure transducer (6) transfers in real time a differential pressure between said two pressure sensors to a controller, and said controller controls the opening degree of an outlet valve of the fan or the power of the fan according to said differential pressure.

## Patentansprüche

1. Rotierender Gas-Gas-Wärmetauscher mit axial isolierender abgedichteter Kammer (9) eines leckagefreien Dichtungssystems, umfassend:
eine Ummantelung (2);
einen Rotor (1), der in der Ummantelung (2) angeordnet ist und angetrieben wird, um sich im Verhältnis zur Ummantelung (2) zu drehen;
ein Dichtungssystem, das zwischen der Ummantelung (2) und einer Spindel des Rotors (1) angeordnet ist und den Raum zwischen der Ummantelung (2) und der Spindel des Rotors (1) in eine ursprüngliche Rauchgas-Umlaufzone und eine saubere Rauchgas-Umlaufzone unterteilt, wobei das Dichtungssystem isolierende abgedichtete Abschnitte (5) aufweist, die in dem Zwischenraum zwischen der Ummantelung und einem Außenumfang des Rotors (1) angeordnet sind, und wobei es vier isolierende abgedichtete Abschnitte (5) gibt,
**dadurch gekennzeichnet, dass** das Dichtungssystem Folgendes umfasst: einen Dichtungssystemkörper, der zwei Enden aufweist, die sich in der radialen Richtung des Rotors (1) gegenüberliegen, wobei die isolierenden abgedichteten Abschnitte (5) auf beiden Seiten jedes der beiden Enden gepaart angeordnet sind und ein Zwischenbereich jedes Paar von isolierenden abgedichteten Abschnitten (5) mit einem Gebläse in Verbindung steht.

2. Rotierender Gas-Gas-Wärmetauscher mit axial isolierender abgedichteter Kammer (9) eines leckagefreien Dichtungssystems nach Anspruch 1, **dadurch gekennzeichnet, dass** der Rotor (1) eine Spindel in einem mittleren Teil, eine Abdeckung am Umfang und ein Traggestell zwischen der Spindel und der Abdeckung umfasst, dass ein Wärmespeicherelement, das aus wärmespeichernden Blechen besteht, in dem Traggestell montiert ist, der Außenumfang des Rotors (1) derjenige der Abdeckung ist, die ursprüngliche Rauchgas-Umlaufzone eine Zone zwischen der Spindel und der Abdeckung an einem Umfang eines Einlassrauchzugs des ursprünglichen Rauchgases angibt und die saubere Rauchgas-Umlaufzone eine Zone zwischen der Spindel und der Abdeckung an einem Umfang eines Auslassrauchzugs des ursprünglichen Rauchgas-Rauchzugs angibt.

3. Rotierender Gas-Gas-Wärmetauscher mit axial isolierender abgedichteter Kammer (9) eines leckagefreien Dichtungssystems nach Anspruch 2, **dadurch gekennzeichnet, dass** der Dichtungssystemkörper zwei unterfächerförmige Dichtungskörper umfasst, die sich von der Spindel bis zur Ummantelung (2) erstrecken und sich in der radialen Richtung des Rotors (1) gegenüberliegen.

4. Rotierender Gas-Gas-Wärmetauscher mit axial isolierender abgedichteter Kammer (9) eines leckagefreien Dichtungssystems nach Anspruch 3, **dadurch gekennzeichnet, dass** ein radiales Dichtungsblech (8) ferner zwischen der Spindel und der Abdeckung angeordnet ist.

5. Rotierender Gas-Gas-Wärmetauscher mit axial isolierender abgedichteter Kammer (9) eines leckagefreien Dichtungssystems nach Anspruch 4, **dadurch gekennzeichnet, dass** Luftlöcher auf fächerförmigen Dichtungsplatten (7) an den unteren und oberen Seiten jedes unterfächerförmigen Dichtungskörpers angeordnet sind und die Luftlöcher mit dem Gebläse in Verbindung stehen.

6. Rotierender Gas-Gas-Wärmetauscher mit axial isolierender abgedichteter Kammer (9) eines leckagefreien Dichtungssystems nach Anspruch 5, **dadurch gekennzeichnet, dass** ein leckagearmes Gebläse leckagearme Luft gleichzeitig in den Zwischenbereich und das Luftloch einbläst und dadurch einen isolierenden Luftvorhang bildet.

7. Rotierender Gas-Gas-Wärmetauscher mit axial isolierender abgedichteter Kammer (9) eines leckagefreien Dichtungssystems nach Anspruch 1 oder 6, **dadurch gekennzeichnet, dass** der isolierende abgedichtete Abschnitt (5) ein Labyrinth ist, das Trennplatten umfasst, die senkrecht und waagerecht angeordnet und beabstandet sind.

8. Rotierender Gas-Gas-Wärmetauscher mit axial isolierender abgedichteter Kammer (9) eines leckagefreien Dichtungssystems nach Anspruch 1 oder 6, **dadurch gekennzeichnet, dass** der isolierende abgedichtete Abschnitt (5) eine Vielzahl von beabstandeten axialen Dichtungsblechen (8) umfasst, die sich von der Ummantelung (2) zum Rotor (1) erstrecken.

9. Rotierender Gas-Gas-Wärmetauscher mit axial isolierender abgedichteter Kammer (9) eines leckagefreien Dichtungssystems nach Anspruch 1, **dadurch gekennzeichnet, dass** zwei Drucksensoren jeweils an einem Auslass des Gebläses und an einer Rohrleitung für das ursprüngliche Rauchgas angeordnet sind, die beiden Drucksensoren mit einem Controller in Verbindung stehen und der Controller das Öffnungsausmaß eines Auslassventils des leckagearmen Gebläses oder die Leistung des Gebläses gemäß den Werten der beiden Drucksensoren steuert.

10. Rotierender Gas-Gas-Wärmetauscher mit axial isolierender abgedichteter Kammer (9) eines leckagefreien Dichtungssystems nach Anspruch 1, **dadurch gekennzeichnet, dass** die Drucksensoren jeweils an einem Ausgangsende des Gebläses und an einer Rohrleitung für das ursprüngliche Rauchgas angeordnet sind, ein Differenzdruckwandler (6) zwischen den beiden Drucksensoren verbunden ist, der Differenzdruckwandler (6) in Echtzeit einen Differenzdruck zwischen den beiden Drucksensoren an einen Controller überträgt, und der Controller das Öffnungsausmaß eines Auslassventils des Gebläses oder die Leistung des Gebläses gemäß dem Differenzdruck steuert.

## Revendications

1. Echangeur de chaleur gaz-gaz, rotatif, ayant une cabine (9) scellée de manière étanche, isolante, axiale, d'un système de scellement étanche sans fuite, comprenant :
- une enveloppe (2) ;
- un rotor (1), qui est disposé dans ladite enveloppe (2) et est entraîné en rotation par rapport à ladite enveloppe (2) ;
- un système de scellement étanche, qui est disposé entre ladite enveloppe (2) et un axe dudit rotor (1), et divise l'espace entre ladite enveloppe (2) et l'axe dudit rotor (1) en une zone de circulation de gaz de combustion initial et une zone de circulation de gaz de combustion propre, ledit système de scellement étanche ayant des sections (5) scellées de manière étanche, isolantes, qui sont disposées dans l'espace entre ladite enveloppe et une périphérie externe dudit rotor (1), et où il y a quatre sections (5) scellées de manière étanche, isolantes,
**caractérisé par le fait que** ledit système de scellement étanche comprend : un corps de système de scellement étanche ayant deux extrémités qui sont opposées l'une à l'autre dans la direction radiale du rotor (1), les sections (5) scellées de manière étanche, isolantes, sont disposées d'une manière appariée sur les deux côtés de chacune desdites deux extrémités, et une région intermédiaire de chaque paire de sections (5) scellées de manière étanche, isolantes, communique avec un ventilateur.

2. Echangeur de chaleur gaz-gaz, rotatif, ayant une cabine (9) scellée de manière étanche, isolante, axiale, selon un système de scellement étanche sans fuite de la revendication 1, **caractérisé par le fait que** ledit rotor (1) comprend un axe dans une partie centrale, un couvercle à la périphérie et une baie de support entre ledit axe et ledit couvercle, un élément de stockage de chaleur consistant en des feuilles de stockage de chaleur est monté dans la baie de support, la périphérie externe dudit rotor (1) est celle dudit couvercle, ladite zone de circulation de gaz de combustion initial indique une zone entre ledit axe et le couvercle à une périphérie d'un conduit d'entrée du gaz de combustion initial, et ladite zone de circulation de gaz de combustion propre indique une zone entre ledit axe et le couvercle à une périphérie d'un conduit de sortie du gaz de combustion initial.

3. Echangeur de chaleur gaz-gaz, rotatif, ayant une cabine (9) scellée de manière étanche, isolante, axiale, d'un système de scellement étanche sans fuite selon la revendication 2, **caractérisé par le fait que** ledit corps de système de scellement étanche comprend deux sous-corps de scellement étanche en forme d'éventail qui s'étendent dudit axe à ladite enveloppe (2) et sont opposés l'un à l'autre dans la direction radiale du rotor (1).

4. Echangeur de chaleur gaz-gaz, rotatif, ayant une cabine (9) scellée de manière étanche, isolante, axiale, d'un système de scellement étanche sans fuite selon la revendication 3, **caractérisé par le fait qu'**une feuille de scellement étanche (8), radiale, est encore disposée entre ledit axe et ledit couvercle.

5. Echangeur de chaleur gaz-gaz, rotatif, ayant une cabine (9) scellée de manière étanche, isolante, axiale, d'un système de scellement étanche sans fuite selon la revendication 4, **caractérisé par le fait que** des trous d'évent sont disposés sur des plaques de scellement étanche (7) en forme d'éventail sur les côtés inférieur et supérieur de chaque sous-corps de scellement étanche en forme d'éventail, et lesdits trous d'évent communiquent avec le ventilateur.

6. Echangeur de chaleur gaz-gaz, rotatif, ayant une cabine (9) scellée de manière étanche, isolante, axiale, d'un système de scellement étanche sans fuite selon la revendication 5, **caractérisé par le fait qu'**un ventilateur à faible fuite injecte de l'air à faible fuite dans ladite région intermédiaire et lesdits trous d'évent de manière simultanée, formant par là un rideau d'air isolant.

7. Echangeur de chaleur gaz-gaz, rotatif, ayant une cabine (9) scellée de manière étanche, isolante, axiale, d'un système de scellement étanche sans fuite selon l'une des revendications 1 ou 6, **caractérisé par le fait que** ladite section (5) scellée de manière étanche, isolante, est un labyrinthe qui comprend des plaques de séparation qui sont disposées verticalement et horizontalement et espacées entre elles.

8. Echangeur de chaleur gaz-gaz, rotatif, ayant une cabine (9) scellée de manière étanche, isolante, axiale, d'un système de scellement étanche sans fuite selon l'une des revendications 1 ou 6, **caractérisé par le fait que** ladite section (5) scellée de manière étanche, isolante, comprend une pluralité de feuilles de scellement étanche (8), axiales, espacées entre elles, qui s'étendent de ladite enveloppe (2) audit rotor (1).

9. Echangeur de chaleur gaz-gaz, rotatif, ayant une cabine (9) scellée de manière étanche, isolante, axiale, d'un système de scellement étanche sans fuite selon la revendication 1, **caractérisé par le fait que** deux capteurs de pression sont disposés respectivement à une extrémité du ventilateur et à une canalisation pour le gaz de combustion initial, les deux capteurs de pression étant en communication avec un dispositif de commande, et ledit dispositif de commande commande le degré d'ouverture d'une soupape de sortie du ventilateur à faible fuite ou la puissance du ventilateur selon des valeurs desdits deux capteurs de pression.

10. Echangeur de chaleur gaz-gaz, rotatif, ayant une cabine (9) scellée de manière étanche, isolante, axiale, d'un système de scellement étanche sans fuite selon la revendication 1, **caractérisé par le fait que** les capteurs de pression sont disposés respectivement à une extrémité de sortie du ventilateur et à une canalisation pour le gaz de combustion initial, un transducteur de pression différentielle (6) est connecté entre lesdits deux capteurs de pression, ledit transducteur de pression différentielle (6) transfère en temps réel une pression différentielle entre lesdits deux capteurs de pression à un dispositif de commande, et ledit dispositif de commande commande le degré d'ouverture d'une soupape de sortie du ventilateur ou la puissance du ventilateur selon ladite pression différentielle.
